(19) Europäisches Patentamt
European Patent Office
Office européen des brevets

(11) **EP 4 312 332 A1**

(12) **EUROPEAN PATENT APPLICATION**

(43) Date of publication:
**31.01.2024 Bulletin 2024/05**

(21) Application number: **22187050.4**

(22) Date of filing: **26.07.2022**

(51) International Patent Classification (IPC):
**H02J 3/32** $^{(2006.01)}$     **B60L 53/63** $^{(2019.01)}$
**H02J 3/14** $^{(2006.01)}$     **H02J 7/00** $^{(2006.01)}$

(52) Cooperative Patent Classification (CPC):
**H02J 3/322; B60L 53/63; B60L 53/67; B60L 55/00;**
**H02J 3/144; H02J 7/0013;** H02J 7/02;
H02J 2310/48; H02J 2310/60

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Hitachi Energy Ltd**
**8050 Zürich (CH)**

(72) Inventor: **BARBATO, Lucio**
**82100 Benevento (IT)**

(74) Representative: **Vossius & Partner**
**Patentanwälte Rechtsanwälte mbB**
**Siebertstraße 3**
**81675 München (DE)**

(54) **CONTROL OF A POWER DISTRIBUTION SYSTEM**

(57)     The present disclosure relates to a method for controlling a power distribution system comprising at least one distributed charging station for coupling to at least one electrical vehicle, EV, and a grid interface for coupling the at least one distributed charging station to a power grid. The method comprises determining an EV power setpoint of the at least one EV based on received data (S101); determining a first overload condition based on the EV power setpoint and a first power constraint of the at least one distributed charging station (S102); updating the EV power setpoint based on the first overload condition (S103); determining a second overload condition based on the updated EV power setpoint and a second power constraint of the grid interface (S104); redetermining the EV power setpoint based on the updated EV power setpoint and the second overload condition (S105); and controlling the power distribution system based on the redetermined EV power setpoint (S106). The present disclosure also relates to a respective system and a power distribution system.

S101 — determining an EV power set point of the at least one EV based on received data

S102 — determining a first overload condition based on the EV power set point and a first power constraint of the at least one distributed charging station

S103 — updating the EV power set point based on the first overload condition

S104 — determining a second overload condition based on the updated EV power set point and a second power constraint of the grid interface

S105 — redetermining the EV power setpoint based on the updated EV power setpoint and the second overload condition

S106 — controlling the power distribution system based on the redetermined EV power setpoint

FIG. 1

EP 4 312 332 A1

**Description**

The present disclosure relates to a method, a device, and a system for controlling a power distribution system.

A power distribution system comprising distributed power entities faces challenges in power distribution. In particular, a power system comprising charging stations being configured to be coupled to electrical vehicles require adequate power supply within a desirable time window while complying to the power constraint, thus requires a power distribution control. The challenge become apparent and significant in an overloaded system, i.e. a system unable to recharge all EVs simultaneously, mainly due to power limitations on the charging equipment and at the grid interface. For instance, a peak EV recharging demand within a time window of a day may cause a system to overload. Such overload condition may be alleviated through control, in particular exploiting the distributed and the central architecture of such system. Moreover, the integration of the renewable resources into the system and an implementation of a vehicle-to-grid (V2G) power transmission further complicates the power distribution control.

Thus, there is a need to improve the controlling a power distribution system, in particular an electrical power system comprising at least one distributed charging station for coupling to at least one electrical vehicle, EV, and a grid interface for coupling the at least one distributed charging station to a power grid.

The present disclosure relates to a method for controlling a power distribution system comprising at least one distributed charging station for coupling to at least one electrical vehicle, EV, and a grid interface for coupling the at least one distributed charging station to a power grid, the method comprising: determining an EV power setpoint of the at least one EV based on received data; determining a first overload condition based on the EV power setpoint and a first power constraint of the at least one distributed charging station; updating the EV power setpoint based on the first overload condition; determining a second overload condition based on the updated EV power setpoint and a second power constraint of the grid interface; redetermining the EV power setpoint based on the updated EV power setpoint and the second overload condition; and controlling the power distribution system based on the redetermined EV power setpoint.

According to an embodiment, the controlling the power distribution system comprises: generating a control signal for at least one converter in the at least one distributed charging station based on the redetermined EV power setpoint, wherein the at least one converter is coupled to the grid interface and the at least one EV is coupled to the at least one converter; and controlling the at least one converter based on the generated control signal.

According to an embodiment, a plurality of EVs is coupled to the at least one distributed charging station, the method further comprising performing: determining EV power setpoints of the plurality of EVs based on the received data; determining first priorities of a power flow between the plurality of EVs and the at least one distributed charging station based on the first power constraint; sorting the plurality of EVs based on the first priorities of the power flow; updating the EV power setpoints of the plurality of EVs based on the sorted plurality of EVs; and aggregating the updated EV power setpoints of the plurality of EVs.

According to an embodiment, a plurality of distributed charging stations is coupled to the grid interface, and wherein a plurality of the EVs is coupled to at least one distributed charging station of the plurality of distributed charging stations.

According to an embodiment, the method further comprises performing: determining EV power setpoints of the plurality of EVs based on the received data; determining second priorities of a power flow between the power grid and the plurality of the distributed charging stations based on the second power constraint; sorting the plurality of distributed charging stations based on the second priorities of the power flow; and redetermining the EV power setpoints of the plurality of EVs based on the sorted plurality of distributed charging stations.

According to an embodiment, the redetermined EV setpoints of the plurality of EVs are same for the EVs connected to a same distributed charging station of the plurality of the charging stations, in particular when the power flow between the same distributed charging station and the power grid of is determined to be limited based on the sorted plurality of distributed charging stations.

According to an embodiment, the method further comprises receiving a power setpoint, in particular an EV-to-grid discharge setpoint; and amending the redetermined EV power setpoints based on at least one of: the received power setpoint and the first priorities and/or the second priorities; or the received power setpoint and at least one scaling factor.

According to an embodiment, the determining the EV power setpoint of the at least one EV is adaptive to the received data, in particular to a remaining time period for a power flow between the at least one EV and the at least one distributed charging station.

According to an embodiment, the received data comprises at least one of a battery charging status of the at least one EV, a desired battery charging status of the at least one EV, a battery capacity of the at least one EV, a remaining time period for a power flow between the at least one EV and the at least one distributed charging station, the first power constraint, or the second power constraint.

According to an embodiment, the first power constraint comprises an inflow power limit boundary of the at least one distributed charging station and/or an outflow power limit boundary of the at least one distributed charging station, and wherein the second power constraint comprises an inflow power limit boundary of the grid interface and/or an outflow power limit boundary of the grid interface.

According to an embodiment, the EV power setpoint is within the first power constraint and/or the second power constraint.

The present disclosure also relates to a device for controlling a power distribution system comprising at least one distributed charging station for coupling to at least one electrical vehicle, EV, and a grid interface for coupling the at least one distributed charging station to a power grid, the device comprising a processor being configured to: determine an EV power setpoint of the at least one EV based on received data; determine a first overload condition based on the EV power setpoint and a first power constraint of the at least one distributed charging station; update the EV power setpoint based on the first overload condition; determine a second overload condition based on the updated EV power setpoint and a second power constraint of the grid interface; redetermine the EV power setpoint based on the updated EV power setpoint and the second overload condition; and control the power distribution system based on the redetermined EV power setpoint.

According to an embodiment, the processor is further configured to perform the method of any one of the above-described embodiments.

According to an embodiment, the device further comprises a memory being configured to store the received data and at least the above-described parameters determined by the processor.

The present disclosure also relates to a device or system for controlling a power distribution system comprising at least one distributed charging station for coupling to at least one electrical vehicle, EV, and a grid interface for coupling the at least one distributed charging station to a power grid, the device or system comprising a first processor and a second processor being configured to: determine, by the first processor, an EV power setpoint of the at least one EV based on received data; determine, by the first processor, a first overload condition based on the EV power setpoint and a first power constraint of the at least one distributed charging station; update, by the first processor or the second processor, the EV power setpoint based on the first overload condition; determine, by the second processor, a second overload condition based on the updated EV power setpoint and a second power constraint of the grid interface; redetermine, by the second processor, the EV power setpoint based on the updated EV power setpoint and the second overload condition; and control, by the first processor or the second processor, the power distribution system based on the redetermined EV power setpoint.

According to an embodiment, the first processor and the second processor are further configured to perform the method of any one of the above-described embodiments.

According to an embodiment, the device further comprises a memory being configured to store the received data and at least the above-described parameters determined by the first processor and the second processor.

According to an embodiment, only one processor is used in the device or system and the tasks performed by the first processor and the second processor are performed by the one processor.

According to an embodiment, a plurality of processors are used in the device or system and the tasks performed by the first processor and the second processor is performed by the plurality of processors.

According to an embodiment, the first processor or the second processor is configured to control the power distribution system by: generating, by the first processor or the second processor, a control signal for at least one converter in the at least one distributed charging station based on the redetermined EV power setpoint, wherein the at least one converter is coupled to the grid interface and the at least one EV is coupled to the at least one converter; and controlling, by the first processor or the second processor, the at least one converter based on the generated control signal.

According to an embodiment, a plurality of EVs is coupled to the at least one distributed charging station and the first processor or the second processor is further configured to: determine, by the first processor, EV power setpoints of the plurality of EVs based on the received data; determine, by the first processor, first priorities of a power flow between the plurality of EVs and the at least one distributed charging station based on the first power constraint; sort, by the first processor or the second processor, the plurality of EVs based on the first priorities of the power flow; updating, by the first processor or the second processor, the EV power setpoints of the plurality of EVs based on the sorted plurality of EVs; and aggregate, by the second processor, the updated EV power setpoints of the plurality of EVs.

According to an embodiment, a plurality of distributed charging stations is coupled to the grid interface, and wherein a plurality of the EVs is coupled to at least one distributed charging station of the plurality of distributed charging stations.

According to an embodiment, the first processor or the second processor is further configured to: determine, by the first processor, EV power setpoints of the plurality of EVs based on the received data; determine, by the second processor, second priorities of a power flow between the power grid and the plurality of the distributed charging stations based on the second power constraint; sort, by the second processor, the plurality of distributed charging stations based on the second priorities of the power flow; and redetermine, by the second processor, the EV power setpoints of the plurality of EVs based on the sorted plurality of distributed charging stations.

According to an embodiment, the redetermined EV setpoints of the plurality of EVs are same for the EVs connected to a same distributed charging station of the plurality of the charging stations, in particular when the power flow between the same distributed charging station and the power grid of is determined to be limited based on the sorted plurality of distributed charging stations.

According to an embodiment, the second processor is configured to: receive a power setpoint, in particular an EV-to-grid discharge setpoint; and amend the redetermined EV power setpoints based on at least one of: the received power setpoint and the first priorities and/or the second priorities; or the received power setpoint and at least one scaling factor.

According to an embodiment, the first processor is configured to determine the EV power setpoint of the at least one EV is adaptive to the received data, in particular to a remaining time period for a power flow between the at least one EV and the at least one distributed charging station.

According to an embodiment, the received data comprises at least one of a battery charging status of the at least one EV, a desired battery charging status of the at least one EV, a battery capacity of the at least one EV, a remaining time period for a power flow between the at least one EV and the at least one distributed charging station, the first power constraint, or the second power constraint.

According to an embodiment, the first power constraint comprises an inflow power limit boundary of the at least one distributed charging station and/or an outflow power limit boundary of the at least one distributed charging station, and wherein the second power constraint comprises an inflow power limit boundary of the grid interface and/or an outflow power limit boundary of the grid interface.

According to an embodiment, the EV power setpoint is within the first power constraint and/or the second power constraint.

According to an embodiment, the EV power setpoint is within a power constraint of a battery of the at least one EV and/or a power constraint of a charging module coupling the at least one EV to the charging station. According to an embodiment, the minimum power rate between the power constraint of the battery and the power constraint of the charging module forms a minimum discharging power rate of the EV power setpoint. According to an embodiment, the maximum power rate between the power constraint of the battery and the power constraint of the charging module forms a maximum recharging power rate of the EV power setpoint.

The present disclosure also relates to a system for controlling a power distribution system comprising at least one distributed charging station for coupling to at least one electrical vehicle, EV, and a grid interface for coupling the at least one distributed charging station to a power grid, the system being configured to: determine, by a first module, an EV power setpoint of the at least one EV based on received data; determine, by the first module, a first overload condition based on the EV power setpoint and a first power constraint of the at least one distributed charging station; update, by the first module or a second module, the EV power setpoint based on the first overload condition; determine, by the second module, a second overload condition based on the updated EV power setpoint and a second power constraint of the grid interface; redetermine, by the second module, the EV power setpoint based on the updated EV power setpoint and the second overload condition; and control, by the first module or the second module, the power distribution system based on the redetermined EV power setpoint.

According to an embodiment, the first module and the second module are further configured to perform the method of any one of the above-described embodiments.

According to an embodiment, the first module or the second module is configured to control the power distribution system by: generating, by the first module or the second module, a control signal for at least one converter in the at least one distributed charging station based on the redetermined EV power setpoint, wherein the at least one converter is coupled to the grid interface and the at least one EV is coupled to the at least one converter; and controlling, by the first module or the second module, the at least one converter based on the generated control signal.

According to an embodiment, a plurality of EVs is coupled to the at least one distributed charging station and the system is further configured to: determine, by the first module, EV power setpoints of the plurality of EVs based on the received data; determine, by the first module, first priorities of a power flow between the plurality of EVs and the at least one distributed charging station based on the first power constraint; sort, by the first module or the second module, the plurality of EVs based on the first priorities of the power flow; updating, by the first module or the second module, the EV power setpoints of the plurality of EVs based on the sorted plurality of EVs; and aggregate, by the second module, the updated EV power setpoints of the plurality of EVs.

According to an embodiment, a plurality of distributed charging stations is coupled to the grid interface, and a plurality of the EVs is coupled to at least one distributed charging station of the plurality of distributed charging stations.

According to an embodiment, the system is further configured to: determine, by the first module, EV power setpoints of the plurality of EVs based on the received data; determine, by the second module, second priorities of a power flow between the power grid and the plurality of the distributed charging stations based on the second power constraint; sort, by the second module, the plurality of distributed charging stations based on the second priorities of the power flow; and redetermine, by the second module, the EV power setpoints of the plurality of EVs based on the sorted plurality of distributed charging stations.

According to an embodiment, the redetermined EV setpoints of the plurality of EVs are same for the EVs connected to a same distributed charging station of the plurality of the charging stations, in particular when the power flow between the same distributed charging station and the power grid of is determined to be limited based on the sorted plurality of distributed charging stations.

According to an embodiment, the second module is configured to: receive a power setpoint, in particular an EV-to-grid discharge setpoint; and amend the redetermined EV power setpoints based on at least one of: the received power setpoint and the first priorities and/or the second priorities; or the received power setpoint and at least one scaling factor.

According to an embodiment, the first module is configured to determine the EV power setpoint of the at least one EV is adaptive to the received data, in particular to a remaining time period for a power flow between the at least one EV and the at least one distributed charging station.

According to an embodiment, the received data comprises at least one of a battery charging status of the at least one EV, a desired battery charging status of the at least one EV, a battery capacity of the at least one EV, a remaining time period for a power flow between the at least one EV and the at least one distributed charging station, the first power constraint, or the second power constraint.

According to an embodiment, the first power constraint comprises an inflow power limit boundary of the at least one distributed charging station and/or an outflow power limit boundary of the at least one distributed charging station, and wherein the second power constraint comprises an inflow power limit boundary of the grid interface and/or an outflow power limit boundary of the grid interface.

According to an embodiment, the EV power setpoint is within the first power constraint and/or the second power constraint.

According to an embodiment, the EV power setpoint is within a power constraint of a battery of the at least one EV and/or a power constraint of a charging module coupling the at least one EV to the charging station. According to an embodiment, the minimum power rate between the power constraint of the battery and the power constraint of the charging module forms a minimum discharging power rate of the EV power setpoint. According to an embodiment, the maximum power rate between the power constraint of the battery and the power constraint of the charging module forms a maximum recharging power rate of the EV power setpoint.

The present disclosure further relates to a power distribution system comprising at least one distributed charging station for coupling to at least one electrical vehicle, EV, and the device of any one of the above-described embodiments.

According to an embodiment, the device further comprises a memory being configured to store the received data and at least the above-described parameters determined by the first module and the second module.

According to an embodiment, the power distribution system further comprises a grid interface for coupling the at least one distributed charging station to a power grid.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

## Description of the Drawings

FIG.1 illustrates a flow chart of the method according to an embodiment of the present disclosure.

FIG.2 illustrates a power distribution system architecture according to an embodiment of the present disclosure.

FIG.3 illustrates a control scheme according to an embodiment of the present disclosure.

FIG.4 illustrates a table of various priority indicators formed according to embodiments of the present disclosure.

FIG.5 illustrates a flow chart of the method according to an embodiment of the present disclosure.

FIG.6 illustrates an overload condition determination scheme according to an embodiment of the present disclosure.

FIG.7 illustrates a control scheme according to an embodiment of the present disclosure.

FIG.8 illustrates a control scheme according to an embodiment of the present disclosure.

FIG. 9 illustrates a flow chart of the V2G support method according to an embodiment of the present disclosure.

FIG. 10a), 10b), and 10c) illustrate devices or systems according to an embodiment of the present disclosure.

FIG. 11a) & 11b) illustrate systems according to embodiments of the present disclosure.

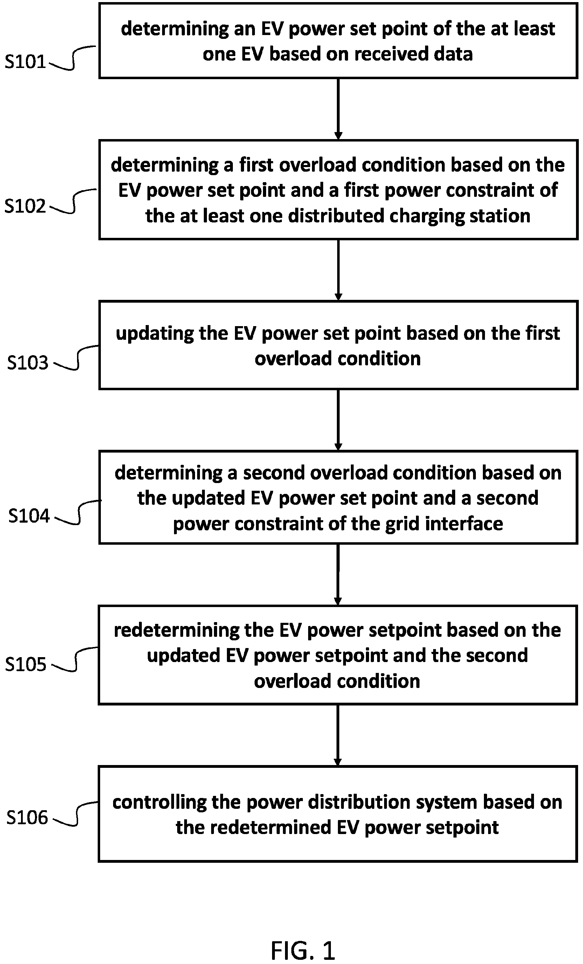

FIG.1 illustrates a flow chart of the method according to an embodiment of the present disclosure. At S101, an EV power set point of the at least one EV is determined based on received data. At S102, a first overload condition based on the EV power set point and a first power constraint of the at least one distributed charging station is determined. At S103, the EV power set point based on the first overload condition is updated. At S104, a second overload condition based on the updated EV power set point and a second power constraint of the grid interface are determined. At S105, the EV power setpoint based on the updated EV power setpoint and the second overload condition is redetermined. At S106, the power distribution system is controlled based on the redetermined EV power setpoint. According to an embodiment, the first and the second overload conditions refer to violations of the first power constraint and the second power constraint, respectively.

According to an embodiment, the first power constraint comprises an inflow power limit boundary of the at least one distributed charging station and/or an outflow power limit boundary of the at least one distributed charging station, and wherein the second power constraint comprises an inflow power limit boundary of the grid interface and/or an outflow power limit boundary of the grid interface.

According to an embodiment, the EV power setpoint is within the first power constraint and/or the second power constraint.

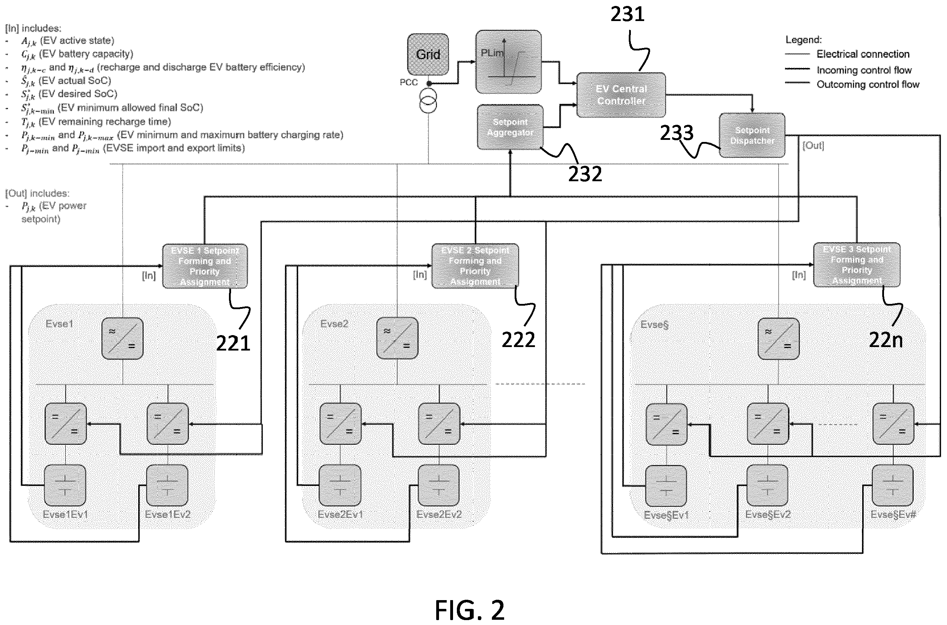

FIG.2 illustrates a power distribution system architecture according to an embodiment of the present disclosure. In particular, the power distribution system is a hybrid centralizeddistributed architecture. That is, the system comprises at least one distributed component, e.g. a distributed charging station, and a central component, e.g. a point of common coupling, PCC. The power distribution system of FIG.2 comprises a power grid, a grid interface (in this example, a point of common coupling, PCC), a plurality of electrical vehicle supply equipment (EVSEs), a plurality of electrical vehicles (EVs), and a central controller (equivalently a device comprising a processor). The EVSE is equivalent to a charging station. The EVSEs are thus referred to as distributed charging stations hereinafter for the coherence with the hybrid architecture. It is noted the wording 'distributed' merely distinguishes the functionality of the distributed charging stations from those of the central controller but does not imply nor limit the physical locations thereof. That is, a plurality of distributed charging stations may be located at a same location, e.g. at a vehicle charging fleet. The PCC couples the plurality of distributed charging stations to the power grid. Each of the distributed charging stations couples the at least one EV to the power grid via PCC. Each of the distributed charging stations comprises at least one converter for converting power from the power grid to the at least one EV (the process referred to as EV recharging) or for converting power from the at least one EV to the power grid (the process referred to as EV discharging). According to an embodiment, a distributed charging station is communicatively coupled to at least one EV for allowing bidirectional communication of data. In this example, an AC/DC converter is couples at least one DC/DC converter to the power grid via the PCC. Each of the at least one DC/DC couples an EV to the AC/DC converter. It is understood by the skilled person that the EVs are coupled to the respective charging stations via any power transmission connection comprising a cable connection and/or inductive wireless coupling.

The power distribution system of FIG.2 also comprises n distributed modules 221 to 22n, wherein n is a natural number. According to an embodiment, a distributed module is a first module. According to an embodiment, a distributed module is a first processor. According to an embodiment, a distributed module is a processor. Each of the n distributed modules 221 to 22n determines an EV power setpoint of the respective at least one EV based on the received data. The EV power setpoint refers to the power rate at which the respective EV is recharged or discharged. According to an embodiment, the received data comprises at least one of a battery charging status of the at least one EV, a desired battery charging status of the at least one EV, a battery capacity of the at least one EV, a remaining time period for a power flow between the at least one EV and the at least one distributed charging station, the first power constraint of the at least one distributed charging station, or the second power constraint of the grid interface. According to an embodiment, the first power constraint comprises an inflow power limit boundary of the at least one distributed charging station and/or an outflow power limit boundary of the at least one distributed charging station, and wherein the second power constraint comprises an inflow power limit boundary of the grid interface and/or an outflow power limit boundary of the grid interface. Each of the $n$ distributed modules 221 to 22n also determines a first overload condition based on the EV power setpoint and the first power constraint. Accordingly, the EV power setpoints of the respective EVs are updated based on the first overload condition. According to an embodiment, each of the n distributed modules 221-22n further determines first priorities of a power flow between the plurality of EVs and the at least one distributed charging station based on the first power constraint; and sorts the plurality of EVs based on the first priorities of the power flow. According to an embodiment, each of the distributed charging stations comprises the respective distributed modules of the n distributed modules 211 to 22n.

The power distribution system of FIG.2 also comprises a central controller 231. According to an embodiment, the central controller is a second module. According to an embodiment, the central controller is a second processor. According to an embodiment, the central controller is a processor. The central controller 231 determines a second overload condition based on the updated EV power setpoints and a second power constraint of the grid interface. The central controller 231 further redetermines the EV power setpoints based on the updated EV power setpoint and the second overload condition. According to an embodiment, the updated power setpoints are aggregated, preferably by the setpoint aggregator 232, before redetermining the EV power setpoints. According to an embodiment, the setpoint aggregator may be a part of the central controller 231. According to an embodiment, the output of the central controller is one power setpoint which is used to redetermine the individual EV power setpoints, in particular by scaling using a setpoint dispatcher 233. According to an embodiment, the central controller 231 comprises the setpoint dispatcher 233. The redetermined EV power setpoints are used to control the power distribution system. According to an embodiment, the controlling the power distribution system comprises generating a control signal for the converters in the distributed charging stations; and controlling the at least one converter based on the generated control signal. According to an embodiment, the central controller 231 determines second priorities of a power flow between the power grid and the plurality of the distributed charging stations based on the second power constraint; sorts the plurality of distributed charging stations based on the second priorities of the power flow; and redetermines the EV power setpoints of the plurality of EVs based on the sorted plurality of distributed charging stations.

According to an embodiment, the controlling the power distribution system comprises: generating a control signal for at least one converter in the at least one distributed charging station based on the redetermined EV power setpoint, wherein the at least one converter is coupled to the grid interface and the at least one EV is coupled to the at least one converter; and controlling the at least one converter based on the generated control signal.

According to an embodiment, a plurality of EVs is coupled to the at least one distributed charging station, the method further comprising performing: determining EV power setpoints of the plurality of EVs based on the received data; determining first priorities of a power flow between the plurality of EVs and the at least one distributed charging station based on the first power constraint; sorting the plurality of EVs based on the first priorities of the power flow; updating the EV power setpoints of the plurality of EVs based on the sorted plurality of EVs; and aggregating the updated EV power setpoints of the plurality of EVs.

According to an embodiment, a plurality of distributed charging stations is coupled to the grid interface, and wherein a plurality of the EVs is coupled to at least one distributed charging station of the plurality of distributed charging stations.

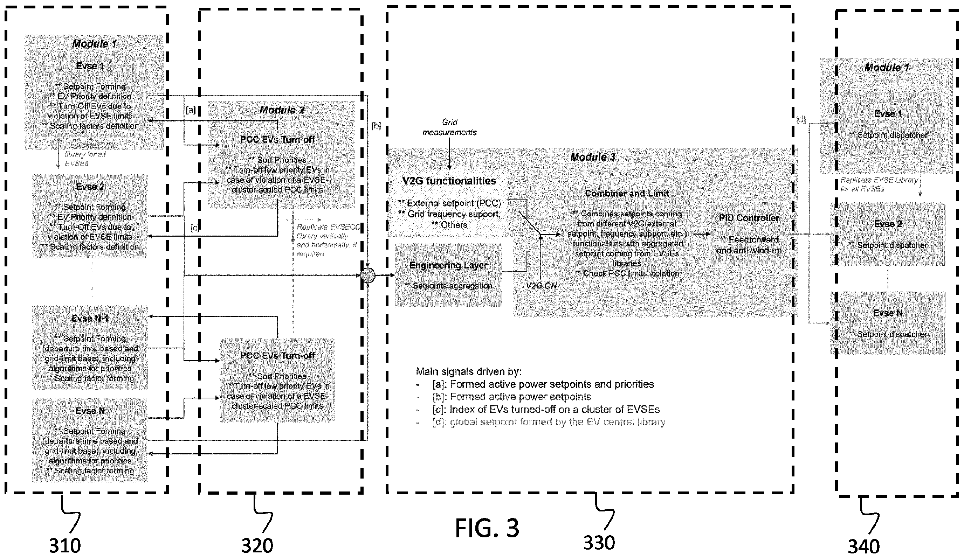

FIG.3 illustrates a control scheme according to an embodiment of the present disclosure. At 310, the EV power setpoints, the EV priorities (equivalently, first priorities), the turn-off EVs due to violation of EVSE limits (equivalently, first power constraint), and the scaling factors are determined. The parameters determined at 310 are gathered at a higher level (320) at which point the first priorities are sorted and EVs with low priorities are determined to be turned-off in case of violation of a fraction of PCC limits (equivalently, second power constraint). The parameters are aggregated at another higher level (330). According to an embodiment, the control hierarchies 320 and 330 are on the same level. At 330, the EV power setpoints are determined based on the received external setpoint when there is a vehicle-to-grid (V2G) request or on the EV power setpoints determined at the charging station level 310. According to an embodiment, at 330 the EV power setpoints are determined based on both the received external setpoint and the EV power setpoints determined at the charging station level 310. At 340 the EV power setpoints are dispatched to the corresponding EVSEs. According to an embodiment, the EVSE modules at 310 are equivalent to those at 340. It is understood the by the skilled person that the modules (module 1 to module 3) may be or may not be physical entity for performing the functions described therein.

The following discloses exemplary mathematical formulas for an EV power setpoint according to embodiments of the present disclosure.

According to an embodiment, the determining the power setpoint EV of the at least one EV is adaptive to the received data, in particular to a remaining time period for a power flow between the at least one EV and the at least one distributed charging station. That is, when the remaining time period during which $k^{th}$ EV coupled to $j^{th}$ distributed charging station is to be recharged is known, the EV power setpoint follows:

$$P_{j,k} = \frac{(\hat{S}_{j,k} - S_{j,k}^*) \cdot C_{j,k}}{T_{j,k}} = \frac{R_{j,k}}{T_{j,k}} \qquad (1)$$

wherein $\hat{S}_{j,k}$ and $S_{j,k}^*$ denote a desired final state of charge (SoC) and a current SoC, respectively, $C_{j,k}$ denotes the capacity of the EV's battery, $T_{j,k}$ denotes the remaining time period during which the EV is to be recharged/discharged, and $R_{j,k}$ denotes the remaining demand, i.e. the energy required to complete the recharging/discharging process. Determining an EV power setpoint based on the remaining time period is hereinafter referred to as a mobility aware method. Based on eq.(1), the power setpoint is determined as the power required to be supplied to the EV for satisfying the remaining demand, i.e. complete the recharging/discharging process, within the remaining recharging time. It is worth noting that eq.(1) assumes the convention that the considering EV will receive a negative setpoint. According to an embodiment, the desired final SoC and/or the remaining time period are received from the respective EV (i.e. the EV and/or the EV owner provides the information by through any communication means, including a coupling cable coupling the respective EV and the charging station and/or an interface, in particular a graphical user interface at the charging station, configured to receive the information from the EV owner). According to an embodiment, in the mobility aware method, the power setpoint is determined based on the received data comprising the desired final SoC and/or the remaining time period. According to an embodiment, in the mobility aware method, the power setpoint is determined based on a preset value when the remaining time and/or the desired SoC is not provided. The accuracy of eq.(1) may improve by introducing battery efficiency terms for both recharging and discharging processes, for both the recharging and the discharging processes, as the following:

$$P_{j,k} = \begin{cases} \dfrac{(\hat{S}_{j,k} - S_{j,k}^*) \cdot C_{j,k}}{T_{j,k}} \cdot \dfrac{1}{\eta_{j,k-c}} = \dfrac{R_{j,k}}{T_{j,k}} \cdot \dfrac{1}{\eta_{j,k-c}}, & for\ recharge\ process \\[4mm] \dfrac{(\hat{S}_{j,k} - S_{j,k}^*) \cdot C_{j,k}}{T_{j,k}} \cdot \dfrac{1}{\eta_{j,k-d}} = \dfrac{R_{j,k}}{T_{j,k}} \cdot \dfrac{1}{\eta_{j,k-d}}, & for\ dischrage\ process \end{cases} \qquad (1')$$

wherein $\eta_{j,k-c}$ and $\eta_{j,k-d}$ denote battery efficiencies for the recharging and the discharging process, respectively. The accuracy of eq.(1') may further improve by accounting terms for the import and export efficiencies of the charging cable, inductive charging, and/or charging station. According to an embodiment, at least one EV power setpoint is amended based on a setpoint provided from an external source, e.g. an operator through an HMI apparatus. According to an embodiment, a portion of EV power setpoints of all EVs ais determined based on the received data and the remaining EV power setpoints of all EVs is determined based on the setpoint provided from an external source. This functionality could be particularly useful to provide flexibility to the charging system, since it could be required to by-pass the automatic algorithm to solve temporary emergencies. In all cases, $P_{j,k}$ is constrained by the battery charging rate limits as follows:

$$P_{j,k-min} \leq P_{j,k} \leq P_{j,k-max} \qquad (2)$$

wherein $P_{j,k-min}$ and $P_{j,k-max}$ denote a minimum and a maximum EV's battery charging rates, respectively.

According to an embodiment, the EV power setpoint is determined in the absence of the remaining time period as follows:

$$P_{j,k} = \begin{cases} P_{j-min} \cdot \max(P_{j-min}, P_{min}) \cdot f_{j,k}, & for\ recharge\ process \\[2mm] P_{j-max} \cdot \min(P_{j-max}, P_{max}) \cdot f_{j,k}, & for\ dischrage\ process \end{cases} \qquad (3)$$

wherein $P_{j-min}$ and $P_{j-max}$ denote import and export limits of the $j^{th}$ charging station, respectively, and $P_{min}$ and $P_{max}$ denote import and the export limits at the grid interface, i.e. at the PCC, respectively, and $f_{j,k}$ is a scaling factor used to scale the import or export limit at the $j^{th}$ charging station to which $k^{th}$ EV is coupled. $max(\cdot)$ and $min(\cdot)$ are operators for choosing a parameter with the maximum value and the minimum value within the bracket, respectively. Determining an EV power setpoint in the absence of the remaining time period is hereinafter referred to as a static method. According to an embodiment, the first power constraint of the at least one distributed charging station comprises $P_{j-min}$ and $P_{j-max}$, and the second power constraint of the grid interface comprises $P_{min}$ and $P_{max}$. Eq.(3) obtains recharging or discharging rates by scaling the recharging or discharging limits based on a scaling factor, i.e. quantities that in some way are related to the limits of the equipment or to the state of each EV, as could be the remaining SoC gap (equivalently, $\hat{S}_{j,k} - S^*_{j,k}$) or the remaining demand need to complete the generic charging process.

According to an embodiment, the scaling factor follows:

$$f_{j,k} = c_{PCC} \cdot v_{j,k} \qquad (4)$$

wherein $c_{PCC}$ denotes the scaling factor applicable for all charging stations and $v_{j,k}$ denotes the scaling factor applicable for an individual $k^{th}$ charging point of the $j^{th}$ charging station. In particular, the scaling factor $c_{PCC}$ allows to scale power limits so that the sum over all setpoints do not violates the PCC limits or the sum of all EVSEs limits, equivalently:

$$C_{PCC} = \frac{\max\left(\bar{P}_{j-min}, P_{min}\right)}{\bar{P}_{j-min}} = \frac{\max\left(\sum_k^{N_c} P_{j-min}, P_{min}\right)}{\sum_k^{N_c} P_{j-min}} \qquad (5)$$

wherein $\bar{P}_{j-min}$ denotes the sum of import limits over all the operating recharging stations, and $N_c$ denotes the number of all the operating recharging stations. It is understood by the skilled person that one arrives at $C_{PCC}$ for a discharging process by substituting the $max(\cdot)$ operator with the $min(\cdot)$ operator and by substituting $P_{j-min}$ with $P_{j-max}$ in eq.(5).

According to an embodiment, $v_{j,k}$ is determined based on the remaining SoC gap as follows:

$$v_{j,k} = \frac{\left(\hat{S}_{j,k} - S^*_{j,k}\right)}{\bar{S}_j} \qquad (6)$$

wherein $\bar{S}_j$ denotes the total remaining SoC gap of the EVs coupled to the j-th charging station and defined as:

$$\bar{S}_j = \sum_k^{N_{e,j}} \left(\hat{S}_{j,k} - S^*_{j,k}\right). \qquad (7)$$

wherein $N_{e,j}$ denotes the number of active EV recharging processes in the j-th charging station. Eq.(6) and eq.(7) illustrate a link between the scaling factor and the remaining SoC gap or with the remaining demand. By considering the SoC gaps, the scaling factor for a generic EV could be determined by scaling the SoC gap with respect to a common scale for all EVs active processes, that is represented by the total remaining SoC gap.

According to an embodiment, $v_{j,k}$ is determined based on the remaining demand as follows:

$$v_{j,k} = \frac{R_{j,k}}{\bar{R}_j} \qquad (8)$$

wherein $\bar{R}_j$ denotes the sum of the remaining demands on the active processes at the j-the charging station and defined as:

$$\bar{R}_j = \sum_k^{N_{e,j}} R_{j,k} \qquad (9)$$

Scaling the power limits with the factor according to eq.(8) may improve the estimation of the power setpoint of eq.(3), since the battery capacities and the SoC gaps of the EVs may differ from each other. The accuracy of eq.(8) and eq.(9) may improve by introducing the charging and discharging efficiencies, if available, as well as, the import and export efficiencies of the chargers, in the same manner as shown for eq.(1').

According to an embodiment, $v_{j,k}$ is determined based on the maximum charging rate of the battery of the EV connected to the $k^{th}$ charging point:

$$v_{j,k} = \frac{P_{j,k-max}}{\bar{P}_j} \qquad (10)$$

wherein $\bar{P}_j$ denotes the sum of the maximum charging rates of EVs coupled to the j-th charging station and defined as:

$$\bar{P}_j = \sum_k^{N_{e,j}} P_{j,k-max} \qquad (11)$$

It is understood by the skilled person that eq.(10) and eq.(11) refer to discharging processes. It is further understood by the skilled person that one arrives at $v_{j,k}$ and $\bar{P}$ for a recharging process by substituting $P_{j,k-min}$ for $P_{j,k-max}$ in eq.(10) and eq.(11). In all cases, $P_{j,k}$ is constrained by the battery charging rate limits as follows:

$$P_{j,k-min} \leq P_{j,k} \leq P_{j,k-max} \qquad (12)$$

According to an embodiment, a preset value is assigned to $S_{j,k}^*$, when the final desired SoC is not provided and the scaling of the power limits is based on the remaining SoC gap or demand. Hereinafter, a method involving any redetermining of a SoC is referred to as SoC flexible method. According to an embodiment, the SoC flexible mode offers a reward, in particular a financial reward, to the EVs that stop the recharging process, in particular when the current SoC is lower than the desired final SoC, when an overload condition is determined at EVSE level and/or at PCC level. According to an embodiment, the rewarding scheme is determined based on the severity of the overload condition and/or the SoC gaps of the EVs. According to an embodiment, an EV with a larger SoC gap is rewarded more than an EV with a smaller SoC gap. According to an embodiment, the desired final SoC ( $S_{j,k}^*$ ) is redetermined to a preset SoC ( $S_{j,k-min}^*$ ), wherein $S_{j,k-min}^* < S_{j,k}^*$ , such that the overload condition is alleviated. According to an embodiment, the recharging process is terminated when the current SoC ($\hat{S}_{j,k}$) is greater than the desired final SoC ( $S_{j,k}^*$ ). According to an embodiment, the reward is offered to the EVs transitioning from a recharging process to a discharging process, when the overload condition is determined at EVSE level and/or at PCC level. According to an embodiment, the external setpoints overwrite the setpoints determined by the above-described setpoint determination methods, i.e. static method and mobility-aware method. According to an embodiment, at least one recharging process is transitioned from a recharging process to a discharging process when an overload condition is determined at EVSE level and/or at PCC level, in particular by the power distribution system.

The following discloses a priority determination and an EV power setpoint redetermination, in particular an EV charging process turn-off sequence, at EVSE level according to an embodiment of the present disclosure.

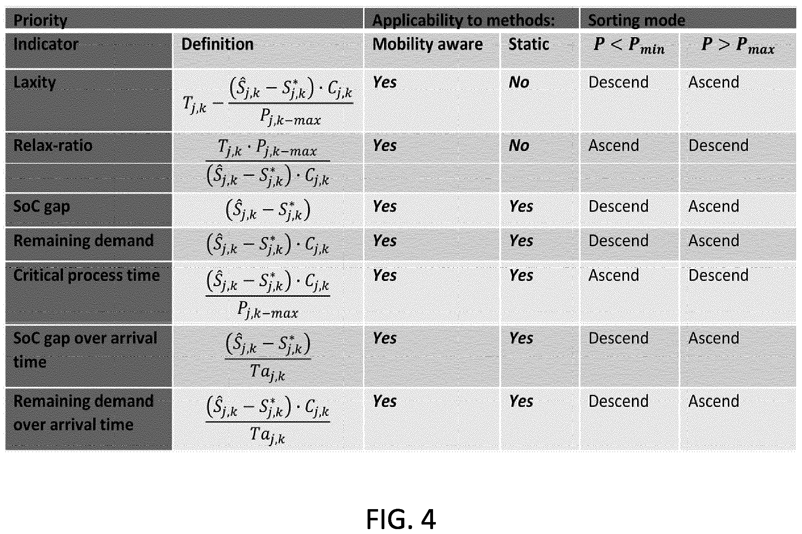

During overload conditions, i.e. when charging station or PCC limits are violated, a set of suitable selected EV charge processes could be turned-off or remodulated on the setpoints. The EV charging processes that are going to be turned-off are selected based on a priority order. Priorities could be associated to different measures that, for a generic EV, could be mainly related to a combination of the charging state, energy demand, arrival time and/or departure time, and charging limits. FIG.4 illustrates a table of various priority indicators formed according to embodiments of the present disclosure, in particular the table lists the priority indicators that are proposed and used to gauge the priority of the EV charging processes. It is noted that the priority indicator once selected applies for all the EV charging processes so that all vehicle priorities are evaluated using the same indicator. Different priority indicators offer flexibility with respect to the application and available measurements as well as signals. According to an embodiment, in case of absence of remaining time, the first two priority indicators listed in the table of FIG.4 may be discarded (laxity and relax-ratio). According to an embodiment, when the battery capacity of the EVs is not available, priority is determined based on the remaining SoC gap, eventually conditioned by the arrival time of each EV. In such case, the priorities may be associated through a first-in-first-out (FIFO) approach weighed by the SoC gap.

The priorities are exploited to establish the relevant vehicles that need to complete the ongoing processes, when emergencies occur and some processes need to be put in stand-by or stopped entirely. According to an embodiment, putting an EV charging process (recharging or discharging) in stand-by or entirely stopping thereof comprises resetting the power setpoint. According to an embodiment, EV charging processes are sorted based on the priority indicators of the table of FIG.4. According to an embodiment, the sorting of the processes may be ascending or descending based on the priority indicators and any violated limit, as schematized in the table of FIG.4. Hereinafter, EV charging processes with lower priority than others are selected first to be turned-off or the setpoints are reset in case of overload conditions. According to an embodiment, the priorities indicators are by-passed. That is, the priority indicator assigned to an EV based on the low or high priority is overwritten by a suitably low or high value. This allows the EV the one to be the first one and the latest one to be turned-off, respectively, if the EV is set as low-priority and high priority. Such by-passing may be useful to manage unexpected operating conditions and unplanned departure.

According to an embodiment, the method further comprises performing: determining EV power setpoints of the plurality of EVs based on the received data; determining second priorities of a power flow between the power grid and the plurality of the distributed charging stations based on the second power constraint; sorting the plurality of distributed charging stations based on the second priorities of the power flow; and redetermining the EV power setpoints of the plurality of EVs based on the sorted plurality of distributed charging stations.

According to an embodiment, the redetermined EV setpoints of the plurality of EVs are same for the EVs connected to a same distributed charging station of the plurality of the charging stations, in particular when the power flow between the same distributed charging station and the power grid of is determined to be limited based on the sorted plurality of distributed charging stations.

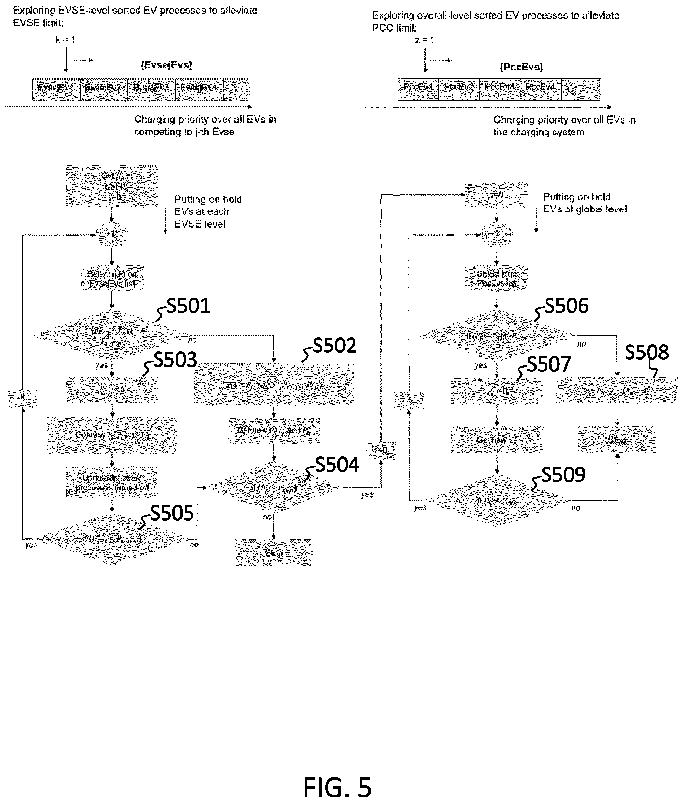

FIG.5 illustrates a flow chart of the method according to an embodiment of the present disclosure. In particular, the flow chart illustrates the EV process turn-off and EV power setpoint updating/redetermination sequence in case of overload conditions the EVSE and/or PCC level during a recharging process. Although omitted for simplicity, the same scheme applies for a discharging process with appropriate substitution of discharging parameters for the recharging parameters.

After initialization and the selection of the $k^{th}$ EV in the $j^{th}$ charging station from EVSEjEVs list, the first overload condition is determined based on the first power constraint at S501, by evaluating $P_{R-j}^* - P_{j,k} < P_{j-min}$, wherein $P_{R-j}^*$ denotes sum of the EV power setpoints of the active EVs (i.e. EV power setpoint is not zero) in the $j^{th}$ charging station. When the evaluation of block S501 yields true, the EV power setpoint $P_{j,k}$ is set to zero (i.e. EV charging process is turned-off) according to S503. In the succeeding blocks, $P_{R-j}^*$ and $P_R^*$ (sum of all EV setpoints in all charging stations) are updated and the list of EV processes turned-off are updated. Then, it is block S505 ($P_{R-j}^* < P_{j-min}$) is evaluated to determine whether further EV power setpoints are to be redetermined. When the evaluation of block S505 yields true, the $((k + 1)^{th}$ EV is selected to be evaluated for block S501. When the evaluation of block S505 yields false, the sum of all EV power setpoints of active EVs, $P_R^*$, is compared with the power limit of the PCC interface, $P_{min}$ (second power constraint) in block S504. When the evaluation of block S502 yields false, the EV power setpoint $P_{j,k}$ is redetermined according to block S502.

In the succeeding block, $P_{R-j}^*$ and $P_R^*$ (sum of all EV setpoints in all charging stations) are updated, then block S504 is evaluated. When the evaluation of block S504 is true, further EV power setpoints are modulated by listing all EVs of all charging stations in PccEVs list. Then, the $z^{th}$ EV is selected to be evaluated in block S506. When the evaluation of block S506 yields true, the $z^{th}$ EV power setpoint is set to zero and $P_R^*$ is updated in the succeeding block. Then, block S509 is evaluated to determine whether further EV power setpoints are to be modulated. When the evaluation of block S509 yields true, the z+1th EV is selected to be evaluated iteratively in S506. When the evaluation block S509 yields false, the EV power setpoint redetermination halts. When the evaluation block S506 yields false, the $z^{th}$ EV power setpoint is redetermined according to block S508, then the EV power setpoint redetermination halts.

It is noted that such setpoint redetermination may be needed in case setpoints are formed with the mobility-aware method, since this method does not account for EVSE and PCC limits. On the contrary, such setpoint redetermination may be redundant in case of setpoints originated with the static approach. This method, indeed, accounts for the EVSE and PCC limits to determine the charging / discharging rates and therefore, the limits should be automatically respected. However, under such operating mode, in case for some EVs the setpoint is fixed via external command, the limits at EVSE or PCC level could be violated and therefore, the present setpoint redetermination is to be operated.

The following discloses a scaling factor determination method according to an embodiment of the present disclosure. According to an embodiment, the scaling factor is determined by the setpoint dispatcher 233. According to an embodiment the EV power setpoint (for recharging or discharging) generated by the central controller 231 is scaled and split into individual EV power setpoints (redetermining the EV power setpoints).

According to an embodiment the redetermined power setpoints may differ from the reference generated by the combination of the setpoints (formed in the setpoint forming stage) due to limit violations, saturation phenomena and/or covering of losses along the charging system or covering of auxiliaries.

Additionally, in case of vehicle-to-grid (V2G) applications, the power setpoints formed by power setpoint forming stage will be completely by-passed since an overall setpoint is fixed at the central level. That is, the setpoint determines the EV power setpoints based on the EV needs in the absence of a V2G request. However, when the V2G support is required, the EV needs to become a secondary information to be considered. Therefore, the setpoint that should be guaranteed, at the charging station level, to meet the V2G request, is the one dictated by the V2G request itself. This causes the setpoint determined at each charging station level to be discarded in favor of the one coming from the V2G request. In this case, the final setpoint formed by the central controller is based on a reference setpoint that is fixed by the active V2G feature (external setpoint or frequency support, for example). According to an embodiment, the final setpoint may be scaled over the active EV charging processes and, this could be done by exploiting the scaling factor defined in the setpoint forming.

According to an embodiment, the dispatcher scaling factor for the active k-th EV coupled to the j-th charging station follows:

$$s_{j,k} = \begin{cases} \dfrac{P_{j,k}}{P_R^*}, & for\ recharge\ process \\ \dfrac{P_{j,k}}{P_D^*}, & for\ dischrage\ process \end{cases} \qquad (13)$$

wherein $P_R^*$ and $P_D^*$ denote the total setpoint for the recharge and discharge processes, respectively, defined by the combination of power setpoints formed by the setpoints forming state or provided by the active V2G feature. $P_{j,k}$ is determined according to eq.(1) or eq.(3).

The following discloses a EV power setpoint redetermination at EVSE level based on the PCC limits according to an embodiment of the present disclosure.

According to an embodiment, the import and export PCC limits, namely $P_{min}$ and $P_{max}$, are scaled at EVSE level as follows:

$$\breve{P}_{min} = P_{min} \cdot \frac{P_{j-min}}{\sum_j^{N_c} P_{j-min}} \qquad (14)$$

$$\breve{P}_{max} = P_{max} \cdot \frac{P_{j-max}}{\sum_j^{N_c} P_{j-max}} \qquad (15)$$

wherein eq.(14) is for a recharging process and eq.(15) is for a discharging process. According to an embodiment, $P_{min}$ and $\check{P}_{max}$ are determined as follows:

$$\check{P}_{min} = P_{min} \cdot \frac{1}{N_c} \qquad (14')$$

$$\check{P}_{max} = P_{max} \cdot \frac{1}{N_c} \qquad (15')$$

According to an embodiment, $P_{min}$ and $\check{P}_{max}$ are preferably determined according to eq.(14) and eq.(15) when the charging stations have different rated power levels (or equivalently, power ratings). According to an embodiment, the scaled PCC limits are combined with the local EVSE limits. According to an embodiment, a binary decider $T_{j,k}$ for the recharging process of the $k^{th}$ EV coupled to the $j^{th}$ charging station for the import mode is determined as follows:

$$T_{j,k} = \begin{cases} 1, & if \; P_{R-j}^* < \max(\check{P}_{min}, P_{j-min}) \; and \; \rho_{j,k} = \underset{k}{minmax} \; (\tilde{\rho}_{j,k}) \\ 0, & otherwise \end{cases} \qquad (16)$$

wherein denotes the binary decider for the charging process of the $k^{th}$ EV coupled to the $j^{th}$ charging station, $P_{j,k}$ denotes the priority of the recharging process of the $k^{th}$ EV coupled to the $j^{th}$ charging stationthe time interval in which the controller reads and takes the input signals, elaborates them according to the implemented algorithms, and produces the desired output signals (mainly, reference setpoints), until the power limits at EVSE level is no longer violated, in particular following the blocks of FIG.5.

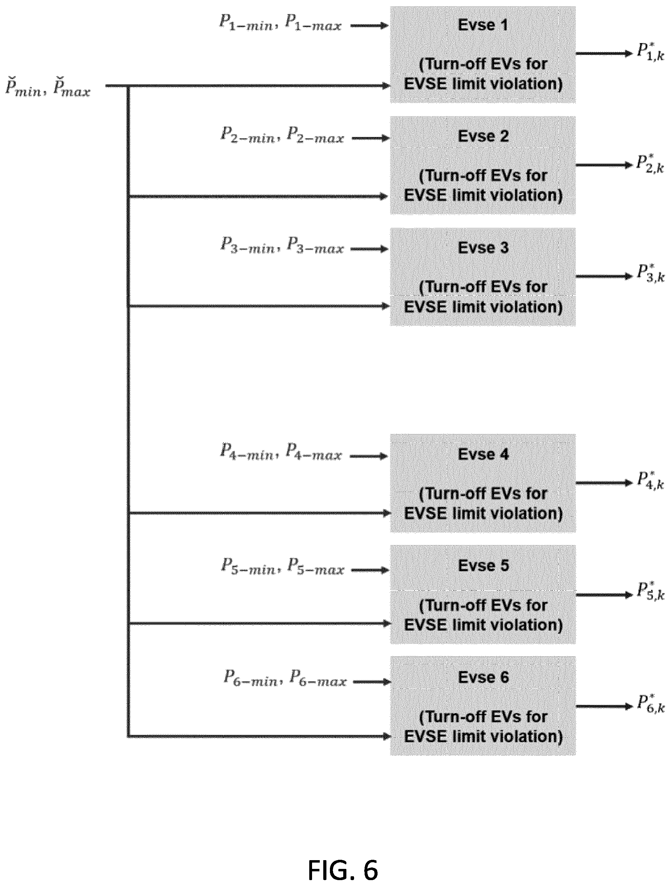

FIG.6 illustrates an overload condition determination scheme according to an embodiment of the present disclosure. In particular, the overload condition is the first overload condition determined at EVSE level based on the EVSE power limits and the PCC powers limit as described above. In FIG.6, each of 6 EVSEs takes the scaled PCC power limits $P_{min}$ and $\check{P}_{max}$ and the respective $j^{th}$ EVSE power limits $P_{j-min}$ and $P_{j-max}$ as input. Accordingly, at each of the EVSE, the EV charging processes to be turned-off are determined. Consequently, the EV power setpoints for the $k^{th}$ EV coupled to the $j^{th}$ charging station $P_{j,k}^*$ is determined. According to an embodiment, the n distributed modules 221 to 22n determines the EV charging processes to be turned-off based on the above-described inputs and determines the above-described $P_{j,k}^*$.

The following discloses a EV power setpoint redetermination, in particular an EV charging process turn-off sequence, at PCC level according to an embodiment of the present disclosure.

According to an embodiment, SoC flexible method is used to resolve the limits violations at EVSE level and/or PCC level. According to an embodiment, the EV power setpoint redetermination at EVSE level is used to resolve the limits violation at EVSE level. According to an embodiment, the EV power setpoint redetermination at EVSE level is performed if and/or when the SoC flexible method does not counteract the limits violations adequately. According to an embodiment, in case of second overload condition determination (i.e. evaluating for PCC power limits violation at PCC level), the binary decider $T_{j,k}$ for the recharging process of the $k^{th}$ EV coupled to the $j^{th}$ charging station is determined as follows:

$$T_{j,k} = \begin{cases} 1, & if \; \sum_{j=1}^{\hat{N}_c} C_j < \max\left( \hat{P}_{min}, \sum_{j=1}^{\hat{N}_c} P_{j-min} \right) \; and \; \rho_{j,k} = \underset{j \in \{1,\dots,\hat{N}_c\},k}{minmax} (\tilde{\rho}_{j,k}) \\ 0, & otherwise \end{cases} \qquad (18)$$

and the binary decider $T_{j,k}$ for the discharging process process of the $k^{th}$ EV coupled to the $j^{th}$ charging station is determined as follows:

$$T_{j,k} = \begin{cases} 1, & if \ \sum_{j=1}^{\hat{N}_c} D_j < \max\left( \hat{P}_{max}, \sum_{j=1}^{\hat{N}_c} P_{j-max} \right) \ and \ \rho_{j,k} = \min_{j \in \{1,...,\hat{N}_c\},k} \max (\tilde{\rho}_{j,k}) \\ 0, & otherwise \end{cases} \quad (19)$$

wherein $\hat{N}_c$ denotes the number of sets of active charging stations at the current controlled EVSEs cluster, $\hat{P}_{min}$ and $\hat{P}_{max}$ denote the import and export PCC limit scaled on the current controller cluster of EVSEs, respectively. According to an embodiment, $\hat{N}_c \leq N_c$ holds. According to an embodiment, $\hat{P}_{min}$ and $\hat{P}_{max}$ differ from $P_{min}$ and $P_{max}$ which were used for the EV power setpoints redetermination at EVSE level. According to an embodiment, $\hat{P}_{min}$ and $\hat{P}_{max}$ are defined in eq.(20) and eq.(21) respectively as follows:

$$\hat{P}_{min} = P_{min} \cdot \frac{\sum_j^{\hat{N}_c} P_{j-min}}{\sum_j^{N_c} P_{j-min}} \quad (20)$$

$$\hat{P}_{max} = P_{max} \cdot \frac{\sum_j^{\hat{N}_c} P_{j-max}}{\sum_j^{N_c} P_{j-max}} \quad (21)$$

According to an embodiment, eq.(18) and eq.(19) may be applied over all the $\hat{N}_c$ EVSEs clusters that have been individuated and may be iterated several times within a cycle time of the controller, until the limits violations are no longer determined.

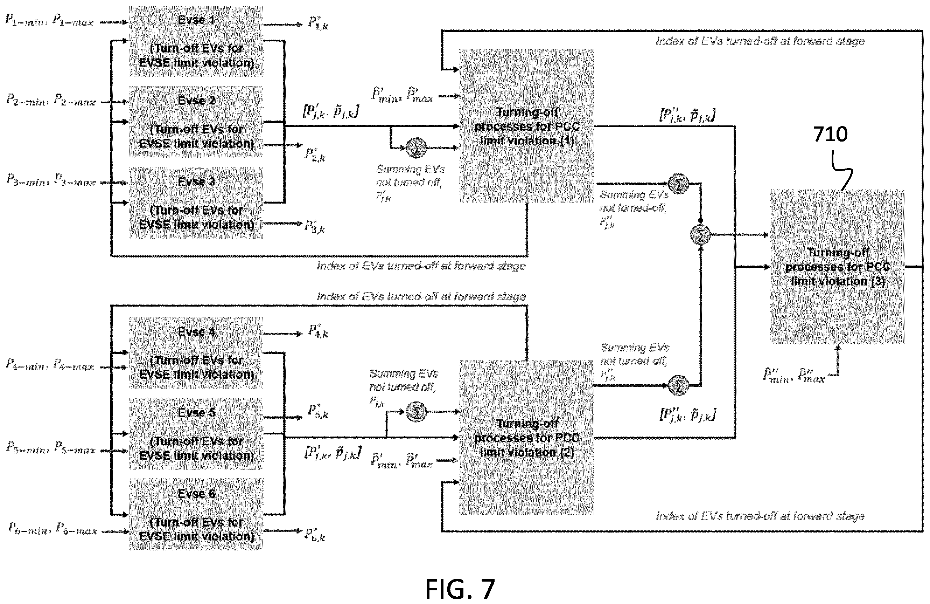

FIG.7 illustrates a control scheme according to an embodiment of the present disclosure. In particular, the power limits violation control at EVSE level and PCC level is shown. The control scheme comprises two sets of $\hat{N}_c$ = 3 EVSEs for which the PCC limits violation is managed via a multi-layers architecture comprising several intermediate turning-off processes determining modules. According to an embodiment, the control scheme of FIG.7 generates $P^*_{j,k}$ based on eq.(18) to eq.(21). According to an embodiment, when the EV power setpoints are determined according to the static method, the PCC limits may be automatically not violated due to the inherent setpoints definition. According to an embodiment, when the EV power setpoints are determined according to the mobility-aware method, the above-described control scheme of FIG.7 may be required. According to an embodiment, when the EV power setpoints are received from an external source, the above-described control scheme of FIG.7 may be required.

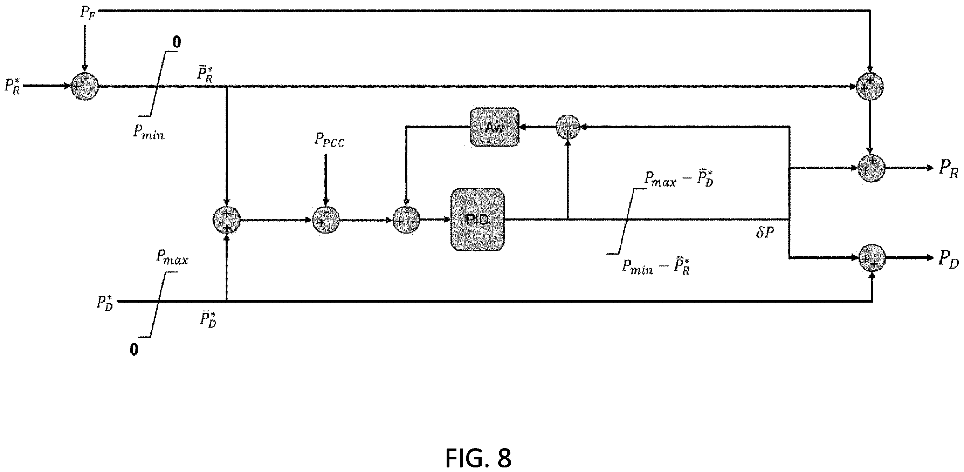

The following discloses a setpoint redetermination according to an embodiment. In particular, the setpoint redetermination method may be used in the central controller 231. According to an embodiment, the central controller 231 may compensate for non-idealities across the power distribution system, mainly relating to active power losses generated by the power flows, power conversion stages, the discharging processes, and/or the recharging processes. In particular, according to an embodiment, the V2G may require assigning externally provided power setpoints to the EV setpoints at PCC level. That is, according to an embodiment, receiving a power setpoint, in particular an EV-to-grid discharge setpoint; and amending the redetermined EV power setpoints based on at least one of: the received power setpoint and the first priorities and/or the second priorities; or the received power setpoint and at least one scaling factor. The wording 'amending' bears the same meaning, thusly can be used interchangeably with wordings such as 'resetting', 'redetermining', 'overwriting', or the like. FIG.8 illustrates the above-described control scheme according to an embodiment of the present disclosure. In particular, the control scheme is a proportional-integral-derivative (PID) control scheme which provides corrective setpoints. $P^*_R$ and $P^*_D$ denote the cumulative setpoints for recharging and discharging processes, respectively. $\overline{P^*_R}$ and $\overline{P^*_D}$ denote the limited quantities of $P^*_R$ and $P^*_D$ bounded by the PCC import and export limits, respectively, namely $P_{min}$ and $P_{max}$. According to an embodiment, an auxiliary power setpoint request $P_F$ is considered. The control loop is closed with the power measured at the PCC, $P_{PCC}$. The PID is protected against wind-up saturation determines $\delta P$, which is linearly combined with the limited cumulative recharging and discharging setpoints according to the feedforward scheme as shown in FIG.8. The 'Aw' block indicates the anti-windup for protecting the 'PID' block against windup saturation. $P_R$ and $P_D$ denote the output of the central controller 231. According to an embodiment, $P_R$ and $P_D$ are scaled and split into individual EV power setpoints, in particular by the dispatcher module 233.

The following discloses a scaling and dispatching of $P_R$ and $P_D$ obtained from the central controller 231 according to an embodiment of the present disclosure. The redetermined EV power setpoint for a recharging process of the $k^{th}$ EV coupled to the $j^{th}$ charging station follows:

$$P_{j,k} = P_R \cdot s_{j,k} \qquad (22)$$

and the redetermined EV power setpoint for a discharging process of the $k^{th}$ EV coupled to the $j^{th}$ charging station follows:

$$P_{j,k} = P_D \cdot s_{j,k} \qquad (23)$$

wherein $s_{j,k}$ is a dispatcher scaling factor determined, according to an embodiment, according to eq.(13).

The following discloses a control method for the power distribution system, particularly focusing on the V2G application. According to an embodiment, a power setpoint, in particular a reference discharging power setpoint is received from an external source, in particular from a transmission system operator (TSO) and/or a distribution system operator (DSO). According to an embodiment, the reference discharging power setpoint is received is an overall system reference across all charging stations and the EVs coupled thereto. That is, the reference discharging power setpoint is received and considered at the PCC level. Accordingly, the redetermined EV power setpoint is amended based on the received discharging power setpoint. As described above, the wording 'amending' bears the same meaning, thusly can be used interchangeably with wordings such as 'resetting', 'redetermining', 'overwriting', or the like.

The following discloses an embodiment of amending the redetermined EV power setpoint, in particular based on the received power setpoint, the first priorities and/or the second priorities. According to an embodiment, the charging stations are iteratively selected from the low recharging priorities to the high recharging priorities (i.e. the second priorities) for the discharging processes based on the received reference discharging power setpoint. Accordingly, the discharging power setpoint are determined for all or the selected charging stations. Then, the EVs of each of the charging stations are iteratively selected from the low recharging priorities to the high recharging priorities (i.e. the first priorities) for the discharging processes. According to an embodiment, the EVs of only the selected charging stations are iteratively selected for the discharging processes. Accordingly, the EV power setpoints are amended for all or the selected EVs. That is, selecting EVs to participate in the discharging process is a two-step method, wherein firstly appropriate charging stations are selected for discharging, after which EVs are selected for discharging, based on the received reference discharging power setpoint, the first priorities, and the second priorities.

According to an embodiment, the total priority of the $j^{th}$ charging station is determined as follows:

$$\rho_j = \sum_{k=1}^{N_{e,j}} \rho_{j,k} \qquad (24)$$

wherein $P_{j,k}$ denotes the priority of the $k^{th}$ EV coupled to the $j^{th}$ charging station and $N_{e,j}$ denotes the number of currently active EV charging processes at the $j^{th}$ EVSE. According to an embodiment, a charging process is considered active when there is a power flow between the charging station and the EV regardless of the power flow direction, i.e. an active charging process comprises the recharging process and the discharging process. The total priority of the power distribution system of all charging stations is determined as follows:

$$\rho_{tot} = \sum_{j=1}^{N_c} \rho_j \qquad (25)$$

wherein $N_c$ denotes the number of current active EVSE processes across the entire power distribution system. The discharging power setpoint for the $j^{th}$ charging station follows:

$$P_{j,D} = P_D \cdot \frac{1}{N_c - 1} \cdot \left(1 - \frac{\rho_j}{\rho_{tot}}\right) \qquad (26)$$

wherein $P_D$ is the reference discharging power setpoint. The term $\frac{1}{N_c - 1}$ is a conservation factor required to keep the energy balance across the power distribution system, i.e. with respect to $P_D$. According to an embodiment, $P_D < P_{j\text{-}max}$ holds.

According to an embodiment, the method further comprises receiving a power setpoint, in particular an EV-to-grid discharge setpoint; and amending the redetermined EV power setpoints based on at least one of: the received power setpoint and the first priorities and/or the second priorities; or the received power setpoint and at least one scaling factor.

According to an embodiment, the determining the EV power setpoint of the at least one EV is adaptive to the received data, in particular to a remaining time period for a power flow between the at least one EV and the at least one distributed charging station.

According to an embodiment, the received data comprises at least one of a battery charging status of the at least one EV, a desired battery charging status of the at least one EV, a battery capacity of the at least one EV, a remaining time period for a power flow between the at least one EV and the at least one distributed charging station, the first power constraint, or the second power constraint.

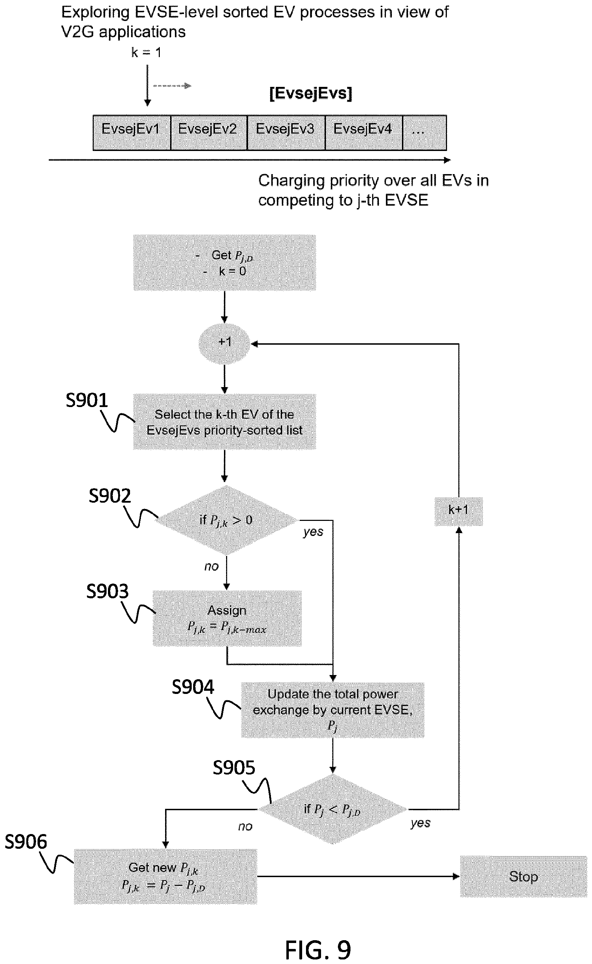

FIG. 9 illustrates a flow chart of the V2G support method according to an embodiment of the present disclosure. In particular, the flow chart selects EVs to participate in discharging processes and amends the EV power setpoint of the selected $k^{th}$ EV coupled to the $j^{th}$ charging station based on the priority-sorted list. At S901, $k^{th}$ EV coupled to the $j^{th}$ charging station is selected based on the EVSEjEVs priority-sorted list. According to an embodiment, the priority-sorted list comprises active charging processes of EVs. According to an embodiment, the priority-sorted list excludes inactive charging processes of EVs and/or discharging processes of EVs, in particular discharging due to an external command received from an external operator. At S902, the EV power setpoint is evaluated against a threshold voltage. When the condition of S902 is not met, the maximum discharging rate of the battery of the $k^{th}$ EV coupled to the $j^{th}$ charging station is assigned to the power setpoint at S903. Otherwise, when the condition of S903 is met, the EV power setpoint is left unamended. At S904, the total power exchange by current EVSE ($P_j$) is updated to be compared against the discharging contribution competing to the $j^{th}$ charging station ($P_{j,D}$) at S905. At S905, whether further EV selection is required is determined. At S906, the EV power setpoint is amended (reduced) to follow the $j^{th}$ charging station discharging power setpoint. It is understood by the skilled person that the method according to the flow chart keeps the highest possible number of EVs recharging. It is further understood by the skilled person that the method according to the flow chart enables both recharging processes and the charging processes of EVs coupled to the same charging station.

The following discloses an embodiment of amending the redetermined EV power setpoint, in particular based on the received power setpoint and at least one scaling factor. In this embodiment, all EVs participate in the discharging process to satisfy the demand set by $P_D$. The amended EV power setpoint for the $k^{th}$ EV coupled to the $j^{th}$ charging station follows:

$$P_{j,k} = P_D \cdot \frac{1}{N_e - 1} \cdot \left(1 - \frac{s_{j,k}}{s_j}\right) \qquad (27)$$

wherein $s_j$ and $s_{j,k}$ denote scaling factors for the $j^{th}$ charging station and for the $k^{th}$ EV coupled to the $j^{th}$ charging station, respectively, and $N_e$ is the number of EV currently connected to all charging stations of the charging facility According to an embodiment, the scaling factors are determined based on any one of the above-described setpoint determination methods, based on the selected mobility-aware or limit-based method. According to an embodiment, when the received power setpoint is a reference recharging power setpoint, all EVs participate in the recharging process to satisfy the demand set by the reference recharging power setpoint.

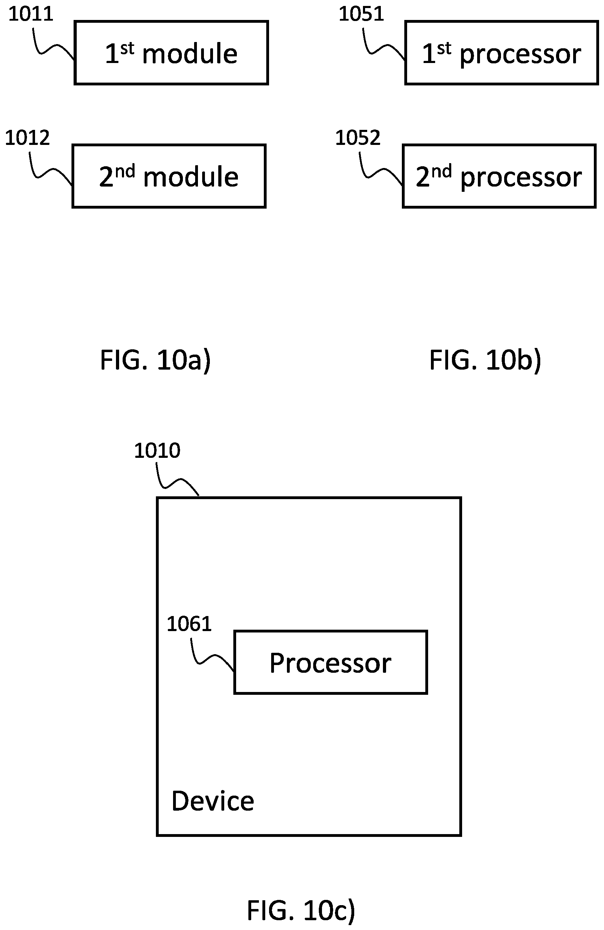

FIG. 10a), 10b), and 10c) illustrate devices according to an embodiment of the present disclosure. In particular, FIG. 10a) illustrates a device or system for controlling a power distribution system comprising at least one distributed charging station for coupling to at least one electrical vehicle, EV, and a grid interface for coupling the at least one distributed charging station to a power grid, the device or system comprising a first module 1011 and a second first module 1012 being configured to: determine, by the first module 1011, an EV power setpoint of the at least one EV based on received data; determine, by the first module 1011, a first overload condition based on the EV power setpoint and a first power constraint of the at least one distributed charging station; update, by the first module 1011 or the second module 1012, the EV power setpoint based on the first overload condition; determine, by the second module 1012, a second overload condition based on the updated EV power setpoint and a second power constraint of the grid interface; redetermine, by the second module 1012, the EV power setpoint based on the updated EV power setpoint and the second overload condition; and control, by the first module 1011 or the second module 1012, the power distribution system based on the redetermined EV power setpoint.

FIG. 10b) illustrates a device or system for controlling a power distribution system comprising at least one distributed charging station for coupling to at least one electrical vehicle, EV, and a grid interface for coupling the at least one distributed charging station to a power grid, the device or system comprising a first processor 1051 and a second processor 1052 being configured to: determine, by the first processor 1051, an EV power setpoint of the at least one EV based on received data; determine, by the first processor 1051, a first overload condition based on the EV power setpoint and a first power constraint of the at least one distributed charging station; update, by the first processor 1051 or the second processor 1052, the EV power setpoint based on the first overload condition; determine, by the second processor 1051, a second overload condition based on the updated EV power setpoint and a second power constraint of the grid interface; redetermine, by the second processor 1052, the EV power setpoint based on the updated EV power setpoint and the second overload condition; and control, by the first processor 1051 or the second processor 1052, the power distribution system based on the redetermined EV power setpoint.

FIG. 10c) illustrates a device 1010 for controlling a power distribution system comprising at least one distributed charging station for coupling to at least one electrical vehicle, EV, and a grid interface for coupling the at least one distributed charging station to a power grid, the device comprising a processor 1061 being configured to: determine an EV power setpoint of the at least one EV based on received data; determine a first overload condition based on the EV power setpoint and a first power constraint of the at least one distributed charging station; update the EV power setpoint based on the first overload condition; determine a second overload condition based on the updated EV power setpoint and a second power constraint of the grid interface; redetermine the EV power setpoint based on the updated EV power setpoint and the second overload condition; and control the power distribution system based on the redetermined EV power setpoint.

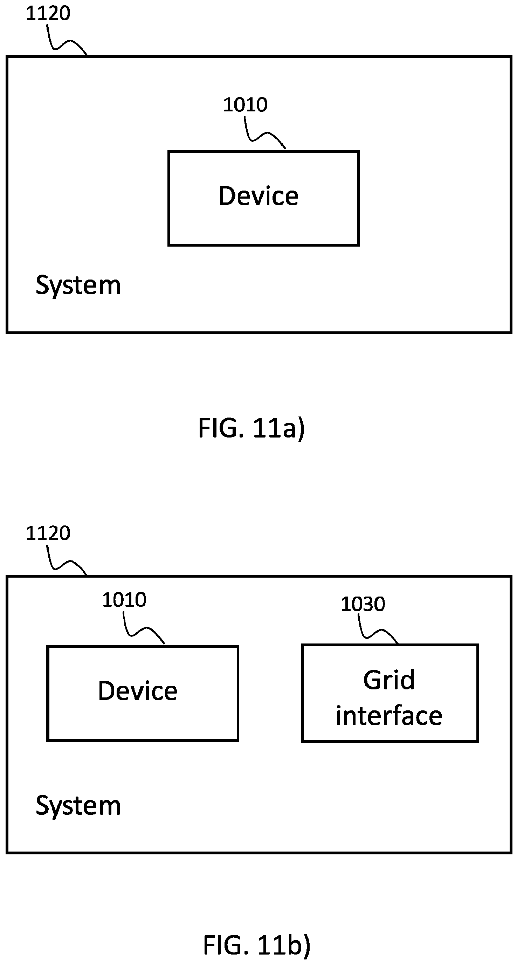

FIG. 11a) & 11b) illustrate systems according to embodiments of the present disclosure. In particular, FIG. 11a) illustrates a power distribution system 1120 comprising at least one distributed charging station for coupling to at least one electrical vehicle, EV, and the device of any one of the above-described embodiments. FIG. 11b) illustrates the power distribution system 1120 comprising at least one distributed charging station for coupling to at least one electrical vehicle, EV, a grid interface for coupling the at least one distributed charging station to a power grid, and the device of any one of the above-described embodiments. According to an embodiment, the system 1120 or the device 1010 is the system or device of FIG. 10a) or 10b). According to an embodiment, the deice 1010 is the device of FIG. 10c).

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for controlling a power distribution system comprising at least one distributed charging station for coupling to at least one electrical vehicle, EV, and a grid interface for coupling the at least one distributed charging station to a power grid, the method comprising:

   determining an EV power setpoint of the at least one EV based on received data;
   determining a first overload condition based on the EV power setpoint and a first power constraint of the at least one distributed charging station;
   updating the EV power setpoint based on the first overload condition;
   determining a second overload condition based on the updated EV power setpoint and a second power constraint of the grid interface;
   redetermining the EV power setpoint based on the updated EV power setpoint and the second overload condition; and
   controlling the power distribution system based on the redetermined EV power setpoint.

2. The method of claim 1, wherein the controlling the power distribution system comprises:

generating a control signal for at least one converter in the at least one distributed charging station based on the redetermined EV power setpoint, wherein the at least one converter is coupled to the grid interface and the at least one EV is coupled to the at least one converter; and

controlling the at least one converter based on the generated control signal.

3. The method of claim 1 or 2, wherein a plurality of EVs is coupled to the at least one distributed charging station, the method further comprising performing:

determining EV power setpoints of the plurality of EVs based on the received data;
determining first priorities of a power flow between the plurality of EVs and the at least one distributed charging station based on the first power constraint;
sorting the plurality of EVs based on the first priorities of the power flow;
updating the EV power setpoints of the plurality of EVs based on the sorted plurality of EVs; and
aggregating the updated EV power setpoints of the plurality of EVs.

4. The method of any one of claims 1 to 3, wherein a plurality of distributed charging stations is coupled to the grid interface, and wherein a plurality of the EVs is coupled to at least one distributed charging station of the plurality of distributed charging stations.

5. The method of claim 4, further comprising performing:

determining EV power setpoints of the plurality of EVs based on the received data;
determining second priorities of a power flow between the power grid and the plurality of the distributed charging stations based on the second power constraint;
sorting the plurality of distributed charging stations based on the second priorities of the power flow; and
redetermining the EV power setpoints of the plurality of EVs based on the sorted plurality of distributed charging stations.

6. The method of claim 5, wherein the redetermined EV setpoints of the plurality of EVs are same for the EVs connected to a same distributed charging station of the plurality of the charging stations, in particular when the power flow between the same distributed charging station and the power grid of is determined to be limited based on the sorted plurality of distributed charging stations.

7. The method of claim 5 or 6, further comprising:

receiving a power setpoint, in particular an EV-to-grid discharge setpoint; and
amending the redetermined EV power setpoints based on at least one of:

the received power setpoint and the first priorities and/or the second priorities; or
the received power setpoint and at least one scaling factor.

8. The method of any one of claims 1 to 7, wherein the determining the EV power setpoint of the at least one EV is adaptive to the received data, in particular to a remaining time period for a power flow between the at least one EV and the at least one distributed charging station.

9. The method of any one of claims 1 to 8, wherein the received data comprises at least one of a battery charging status of the at least one EV, a desired battery charging status of the at least one EV, a battery capacity of the at least one EV, a remaining time period for a power flow between the at least one EV and the at least one distributed charging station, the first power constraint, or the second power constraint.

10. The method of any one of claims 1 to 9, wherein the first power constraint comprises an inflow power limit boundary of the at least one distributed charging station and/or an outflow power limit boundary of the at least one distributed charging station, and wherein the second power constraint comprises an inflow power limit boundary of the grid interface and/or an outflow power limit boundary of the grid interface.

11. The method of any one of claims 1 to 10, wherein the EV power setpoint is within the first power constraint and/or the second power constraint.

12. A system for controlling a power distribution system comprising at least one distributed charging station for coupling to at least one electrical vehicle, EV, and a grid interface for coupling the at least one distributed charging station to a power grid, the system being configured to:

> determine, by a first module, an EV power setpoint of the at least one EV based on received data;
> determine, by the first module, a first overload condition based on the EV power setpoint and a first power constraint of the at least one distributed charging station;
> update, by the first module or a second module, the EV power setpoint based on the first overload condition;
> determine, by the second module, a second overload condition based on the updated EV power setpoint and a second power constraint of the grid interface;
> redetermine, by the second module, the EV power setpoint based on the updated EV power setpoint and the second overload condition; and
> control, by the first module or the second module, the power distribution system based on the redetermined EV power setpoint.

13. The device of claim 12, wherein the system is further configured to perform the method of any one of claims 1 to 11.

14. A power distribution system comprising at least one distributed charging station for coupling to at least one electrical vehicle, EV, and the system of claim 12 or 13.

15. The power distribution system of claim 14, further comprising a grid interface for coupling the at least one distributed charging station to a power grid.

S101 — determining an EV power set point of the at least one EV based on received data

S102 — determining a first overload condition based on the EV power set point and a first power constraint of the at least one distributed charging station

S103 — updating the EV power set point based on the first overload condition

S104 — determining a second overload condition based on the updated EV power set point and a second power constraint of the grid interface

S105 — redetermining the EV power setpoint based on the updated EV power setpoint and the second overload condition

S106 — controlling the power distribution system based on the redetermined EV power setpoint

FIG. 1

FIG. 2

**Module 1**

**Evse 1**
** Setpoint Forming
** EV Priority definition
** Turn-Off EVs due to violation of EVSE limits
** Scaling factors definition

*Replicate EVSE library for all EVSEs*

**Evse 2**
** Setpoint Forming
** EV Priority definition
** Turn-Off EVs due to violation of EVSE limits
** Scaling factors definition

**Evse N-1**
** Setpoint Forming (departure time based and grid-limit base), including algorithms for priorities
** Scaling factor forming

**Evse N**
** Setpoint Forming (departure time based and grid-limit base), including algorithms for priorities
** Scaling factor forming

[a]

[c]

310

**Module 2**

**PCC EVs Turn-off**
** Sort Priorities
** Turn-off low priority EVs in case of violation of a EVSE-cluster-scaled PCC limits

**PCC EVs Turn-off**
** Sort Priorities
** Turn-off low priority EVs in case of violation of a EVSE-cluster-scaled PCC limits

*Replicate EVSECC library vertically and horizontally, if required*

320

[b]

*Grid measurements*

**Module 3**

**V2G functionalities**
** External setpoint (PCC)
** Grid frequency support,
** Others

**Engineering Layer**
** Setpoints aggregation

V2G ON

**Combiner and Limit**
** Combines setpoints coming from different V2G(external setpoint, frequency support, etc.) functionalities with aggregated setpoint coming from EVSEs libraries
** Check PCC limits violation

**PID Controller**
** Feedforward and anti wind-up

Main signals driven by:
- [a]: Formed active power setpoints and priorities
- [b]: Formed active power setpoints
- [c]: Index of EVs turned-off on a cluster of EVSEs
- [d]: global setpoint formed by the EV central library

330

[d]

**Module 1**

**Evse 1**
** Setpoint dispatcher

*Replicate EVSE Library for all EVSEs*

**Evse 2**
** Setpoint dispatcher

**Evse N**
** Setpoint dispatcher

340

**FIG. 3**

EP 4 312 332 A1

| Priority | | Applicability to methods: | | Sorting mode | |
|---|---|---|---|---|---|
| Indicator | Definition | Mobility aware | Static | $P < P_{min}$ | $P > P_{max}$ |
| Laxity | $T_{j,k} - \dfrac{\left(\hat{S}_{j,k} - S_{j,k}^*\right) \cdot C_{j,k}}{P_{j,k-max}}$ | Yes | No | Descend | Ascend |
| Relax-ratio | $\dfrac{T_{j,k} \cdot P_{j,k-max}}{\left(\hat{S}_{j,k} - S_{j,k}^*\right) \cdot C_{j,k}}$ | Yes | No | Ascend | Descend |
| SoC gap | $\left(\hat{S}_{j,k} - S_{j,k}^*\right)$ | Yes | Yes | Descend | Ascend |
| Remaining demand | $\left(\hat{S}_{j,k} - S_{j,k}^*\right) \cdot C_{j,k}$ | Yes | Yes | Descend | Ascend |
| Critical process time | $\dfrac{\left(\hat{S}_{j,k} - S_{j,k}^*\right) \cdot C_{j,k}}{P_{j,k-max}}$ | Yes | Yes | Ascend | Descend |
| SoC gap over arrival time | $\dfrac{\left(\hat{S}_{j,k} - S_{j,k}^*\right)}{Ta_{j,k}}$ | Yes | Yes | Descend | Ascend |
| Remaining demand over arrival time | $\dfrac{\left(\hat{S}_{j,k} - S_{j,k}^*\right) \cdot C_{j,k}}{Ta_{j,k}}$ | Yes | Yes | Descend | Ascend |

## FIG. 4

FIG. 5

$P_{1-min}, P_{1-max}$ →

**Evse 1**

(Turn-off EVs for
EVSE limit violation)

→ $P^*_{1,k}$

$\breve{P}_{min}, \breve{P}_{max}$

$P_{2-min}, P_{2-max}$ →

**Evse 2**

(Turn-off EVs for
EVSE limit violation)

→ $P^*_{2,k}$

$P_{3-min}, P_{3-max}$ →

**Evse 3**

(Turn-off EVs for
EVSE limit violation)

→ $P^*_{3,k}$

$P_{4-min}, P_{4-max}$ →

**Evse 4**

(Turn-off EVs for
EVSE limit violation)

→ $P^*_{4,k}$

$P_{5-min}, P_{5-max}$ →

**Evse 5**

(Turn-off EVs for
EVSE limit violation)

→ $P^*_{5,k}$

$P_{6-min}, P_{6-max}$ →

**Evse 6**

(Turn-off EVs for
EVSE limit violation)

→ $P^*_{6,k}$

# FIG. 6

FIG. 7

EP 4 312 332 A1

FIG. 8

Exploring EVSE-level sorted EV processes in view of V2G applications

k = 1

[EvsejEvs]

| EvsejEv1 | EvsejEv2 | EvsejEv3 | EvsejEv4 | ... |

Charging priority over all EVs in competing to j-th EVSE

- Get $P_{j,D}$
- k = 0

+1

**S901** Select the k-th EV of the EvsejEvs priority-sorted list

**S902** if $P_{j,k} > 0$

yes

no

**S903** Assign $P_{j,k} = P_{j,k-max}$

**S904** Update the total power exchange by current EVSE, $P_j$

**S905** if $P_j < P_{j,D}$

no        yes

k+1

**S906** Get new $P_{j,k}$ $P_{j,k} = P_j - P_{j,D}$

Stop

## FIG. 9

1011

1st module

1051

1st processor

1012

2nd module

1052

2nd processor

FIG. 10a)

FIG. 10b)

1010

1061

Processor

Device

FIG. 10c)

1120

1010

Device

System

FIG. 11a)

1120

1010

1030

Device

Grid interface

System

FIG. 11b)

Europäisches
Patentamt

European
Patent Office

Office européen
des brevets

# EUROPEAN SEARCH REPORT

Application Number

EP 22 18 7050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2020/250012 A1 (ECOLE POLYTECHNIQUE FED LAUSANNE EPFL [CH]) 17 December 2020 (2020-12-17) * abstract; claims 1-6; figures 1,4-5 * * page 3 * * pages 3-17; claim 1 * | 1-15 | INV. H02J3/32 B60L53/63 H02J3/14 H02J7/00 |
| Y | US 2021/354583 A1 (HE CHUNLIN [CN] ET AL) 18 November 2021 (2021-11-18) * abstract; figures 1,2 * * paragraphs [0005] - [0010] * * paragraphs [0016] - [0047] * | 1-15 | |
| Y | US 2021/039516 A1 (BROMBACH JOHANNES [DE] ET AL) 11 February 2021 (2021-02-11) * paragraphs [0012] - [0142]; figures 1,24 * | 2,4,5 | |
| A | US 2019/359065 A1 (AL-AWAMI ALI T [SA] ET AL) 28 November 2019 (2019-11-28) * paragraphs [0034] - [0050]; figure 3 * | 1-15 | |
| A | WO 2021/058863 A1 (LIIKENNEVIRTA OY / VIRTA LTD [FI]) 1 April 2021 (2021-04-01) * abstract; figure 1 * * pages 2-15 * | 1-15 | TECHNICAL FIELDS SEARCHED (IPC) H02J B60L |
| A | CN 108 494 034 A (UNIV ELECTRONIC SCI & TECH CHINA) 4 September 2018 (2018-09-04) * abstract; claims 1-6; figures 1,2 * | 1-15 | |
| A | CN 113 097 998 A (SUZHOU SIRUIWEI NEW ENERGY TECH CO LTD) 9 July 2021 (2021-07-09) * abstract; claims 1-8 * | 1-15 | |

-/--

The present search report has been drawn up for all claims

| Place of search | Date of completion of the search | Examiner |
|---|---|---|
| Munich | 17 January 2023 | Lorenzo Feijoo, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 22 18 7050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 204 578 A (GUANGZHOU BENZHOU ELECTRIC POWER SCIENCE AND TECH LIMITED COMPANY) 18 March 2022 (2022-03-18) * abstract; figures 1-10 * ----- | 1-15 | |

**TECHNICAL FIELDS SEARCHED (IPC)**

The present search report has been drawn up for all claims

| Place of search | Date of completion of the search | Examiner |
|---|---|---|
| Munich | 17 January 2023 | Lorenzo Feijoo, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 7050

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2023

| Patent document cited in search report | Publication date | Patent family member(s) | Publication date |
|---|---|---|---|
| WO 2020250012 A1 | 17-12-2020 | EP 3983258 A1<br>US 2022250500 A1<br>WO 2020250012 A1 | 20-04-2022<br>11-08-2022<br>17-12-2020 |
| US 2021354583 A1 | 18-11-2021 | CN 108973752 A<br>US 2021354583 A1<br>WO 2020034614 A1 | 11-12-2018<br>18-11-2021<br>20-02-2020 |
| US 2021039516 A1 | 11-02-2021 | BR 112019021973 A2<br>CA 3060322 A1<br>CN 110546843 A<br>DE 102017108562 A1<br>EP 3613118 A1<br>JP 6995138 B2<br>JP 2020518215 A<br>KR 20190135538 A<br>US 2021039516 A1<br>WO 2018193097 A1 | 05-05-2020<br>25-10-2018<br>06-12-2019<br>25-10-2018<br>26-02-2020<br>14-01-2022<br>18-06-2020<br>06-12-2019<br>11-02-2021<br>25-10-2018 |
| US 2019359065 A1 | 28-11-2019 | NONE | |
| WO 2021058863 A1 | 01-04-2021 | CN 114555414 A<br>EP 4034418 A1<br>FI 20195818 A1<br>JP 2022549722 A<br>US 2022348102 A1<br>WO 2021058863 A1 | 27-05-2022<br>03-08-2022<br>27-03-2021<br>28-11-2022<br>03-11-2022<br>01-04-2021 |
| CN 108494034 A | 04-09-2018 | NONE | |
| CN 113097998 A | 09-07-2021 | NONE | |
| CN 114204578 A | 18-03-2022 | NONE | |

EPO FORM P0459

For more details about this annex : see Official Journal of the European Patent Office, No. 12/82